# FASCICULE DE BREVET EUROPEEN

(11) **EP 2 872 460 B1**
(45) Date de publication et mention de la délivrance du brevet: **25.05.2016**
(21) Numéro de dépôt: 13756551.1
(22) Date de dépôt: 09.07.2013
(51) Int. Cl.: C04B 28/02, C04B 28/04, C04B 28/06, C04B 28/08, C04B 28/14

(54) **COMPOSITIONS AUTONIVELANTES A BASE DE LIANTS HYDRAULIQUES POUR CHAPES OU REVETEMENTS DE SOL**
SELBSTNIVELLIERENDE HYDRAULISCHE BINDEMITTELZUSAMMENSETZUNGEN FÜR ESTRICHE ODER BODENBELÄGE
SELF-LEVELLING COMPOSITIONS OF HYDRAULIC BINDERS FOR SCREEDS OR FLOOR COVERINGS

(30) Priorité: 10.07.2012 FR 1256632
(43) Date de publication de la demande: 20.05.2015
(73) Titulaire: Saint-Gobain Weber, 77170 Servon (FR)
(72) Inventeur: GUNNAR, Laurén, FI-21600 Pargas (FI); ALGARS, Rainer, FI-21600 Pargas (FI); SODERGARD, Anders, FI-20250 Turku (FI); EKMAN, Kenneth, FI-20760 Piispanristi (FI)
(74) Mandataire: Douysset, Laurence
(86) Numéro de dépôt international: PCT/FR2013/051634
(87) Numéro de publication internationale: WO 2014/009649

(56) Documents cités:
- EP-A1- 1 197 480
- EP-A1- 1 683 768
- WO-A1-2009/111295
- FR-A1- 2 763 065
- FR-A1- 2 943 665
- FR-A1- 2 950 879

## Description

### Domaine technique de l'invention

La présente invention concerne un kit de composants pour la fabrication de chapes de sol ou de revêtement de sol autonivelants, le procédé de fabrication de chapes ou de revêtement à partir de ce kit, des compositions pour chapes ou revêtement de sol autonivelants ainsi que les chapes ou revêtement de sol obtenus.

### Etat de l'art

Les chapes sont des couches de mortier appliquées sur un substrat, dont le but est d'aplanir, de niveler et éventuellement de noyer dans sa masse des gaines techniques telles que des gaines électriques, des tubes de plancher chauffant, des câbles de chauffage, etc, si nécessaire. Les chapes constituent généralement des supports pour revêtements de sols.

Une fois coulées et séchées, les chapes peuvent nécessiter un traitement de surface pour améliorer leur résistance aux chocs, leur dureté et leur résistance à l'eau mais aussi à différents composés chimiques tels que l'huile.

Différentes solutions ont été développées pour rendre ces chapes plus résistantes et durables. Des chapes dites « autonivelantes » permettent d'obtenir, après application ou coulage sur une surface horizontale, des chapes sans irrégularités de surface et parfaitement horizontales sans avoir besoin de réaliser un travail supplémentaire tel qu'un lissage de la surface à la suite du coulage. Une telle chape réduit la pénibilité des applicateurs sur chantier. Elle comprend un matériau qui le nivellement de lui-même horizontalement, par le seul effet de la gravité.
Une méthode couramment employée pour améliorer les propriétés de surface de ces chapes autonivelantes est d'appliquer, après séchage de la chape, un traitement de surface possédant les propriétés recherchées. L'application de ces revêtements qui peuvent être par exemple des peintures est donc une étape supplémentaire, distincte de l'étape du coulage de la chape et qui nécessite un temps d'attente relativement long, avant application, le plus souvent d'au moins 24 heures, correspond au temps de séchage de la chape.

Les demandes JP2009203790 ou JP2010019009 décrivent notamment des systèmes autonivelants sur lesquels différentes couches comme une couche primaire, une couche adhésive et une couche de finition sont appliquées pour améliorer la planéité et la durabilité de la structure. Entre l'application de deux couches successives, des étapes de durcissement intermédiaires sont nécessaires, ce qui rend le procédé d'application de la chape et le traitement de surface consommateur en temps et coûteux.

La demande EP 1683768 A1 divulgue une composition cimentaire utilisée pour la fabrication de chapes liquides autonivelantes renfermant du ciment, un superplastifiant et un agent de blocage du retrait constitué de l'association de silice amorphe et d'au moins un polysaccharide.

Pour pallier aux inconvénients précités, le but de la présente invention est de proposer un kit permettant de fabriquer une chape ou un revêtement de sol (« overlayment » en anglais) présentant les propriétés recherchées relatives à la planéité, la résistance aux chocs et la résistance aux agressions chimiques, en limitant le nombre d'étapes nécessaires à sa fabrication et en permettant la formation d'un revêtement de surface par simple durcissement par irradiation de la chape.

La présente invention porte sur un kit pour la préparation d'une chape ou revêtement de sol autonivelants caractérisé en ce qu'il comprend :
- un composant minéral qui est un mortier autonivelant sous forme de poudre comprenant un ou plusieurs additifs dont au moins un est un additif rhéologique de type plastifiant et/ ou superplastifiant, la quantité d'additifs étant comprise entre 0,01 et 20%poids rapporté au poids de mortier, et
- 0,1 à 15%poids par rapport au composant minéral, de préférence 0,1 à 10% poids, d'un composant organique qui est une composition liquide photodurcissable.

Les deux composants du kit peuvent être conditionnés dans deux contenants différents: le composant minéral est généralement stocké dans un sac ou seau, et la composition liquide photodurcissable dans un flacon. Le mélange des deux composants peut être réalisé directement sur site ou chantier, durant la préparation de la chape.

Les deux composants peuvent être également pré-mélangés et stockés dans un contenant unique, souvent sous forme de sac, fournissant ainsi une préparation prête à l'emploi. L'ajout d'eau à cette préparation conduit au mortier gâché, utilisable pour la réalisation de chapesautonivelantes.

A partir du kit, après addition d'eau pour obtenir une composition fluide applicable sur la surface à recouvrir, il est possible d'obtenir une chape ou un revêtement de sol présentant la planéité recherchée et munie d'un revêtement lui conférant les propriétés nécessaires à son utilisation.

Ainsi la chape obtenue comprend directement un revêtement, formé par le durcissement par irradiation de la chape. Le produit final obtenu peut être utilisé ou traité immédiatement après irradiation.

Un autre objet de l'invention est le procédé de fabrication de la chape ou revêtement de sol autonivelants, à partir du kit décrit ci-dessus.
Ce procédé comprend les étapes les étapes successives suivantes :
a) mélange des différents constituants du kit tels que décrits précédemment avec une quantité d'eau suffisante pour obtenir une composition fluide,
b) application de la compostion fluide obtenue par pompage, par pulvérisation ou par coulage sur la surface à recouvrir,
c) pré-séchage de la surface pendant une durée d'au moins 24 heures,
d) durcissement de la surface pré-séchée avec une source d'irradiation externe.

Ce procédé permet notamment de limiter les solvants utilisés lors de la préparation de la chape.

L'invention porte également sur une composition pour chapes ou revêtement de sol autonivelants comprenant un mélange, en pourcentage poids, de :
- 70 à 90%d'un mortier comprenant un liant hydraulique comprenant entre 0,01 et 20%poids d'additifs rapporté au poids de mortier, au moins un des additifs étant un additif rhéologique de type plastifiant et/ ou superplastifiant,
- 0,1 à 15%d'une composition liquide photodurcissable, et
- 10 à 30%d'eau.

Une telle composition peut être appliquée sur la surface à recouvrir et former ainsi une chape ou un revêtement de sol munis d'une couche de revêtement de surface.

Un autre objet de la présente invention est la chape ou le revêtement de sol susceptibles d'être obtenus par le procédé mentionné ci-dessus.

Sous le terme de photodurcissable, on comprend que le composant organique polymérise et par conséquent durcit, sous l'effet d'une irradiation. L'irradiation peut être de type électromagnétique et/ou lumineuse. La réaction de polymérisation à partir de monomère et/ou oligomère est photoinduite. Le principe d'une telle réaction consiste à produire des espèces actives qui permettent d'amorcer la réaction de polymérisation des monomères et/ou oligomères en exposant la formulation à un rayonnement lumineux. La nature de ces espèces actives dépend directement de la fonctionnalité des monomères et/ou oligomères et leur création n'a pas lieu par excitation directe des monomères ou oligomères mais via le photoamorceur, présent dans la composition et dont la photolyse libère des espèces réactives envers le groupement fonctionnel du monomère et/ou de l'oligomère. La photopolymérisation offre notamment l'avantage d'être quasi instantanée, puisque le passage de la molécule au matériau polymère peut s'effectuer en quelques dixièmes de seconde sous irradiation intense. En agissant sur la concentration en photoamorceur et/ ou sur la longueur d'onde et l'intensité du rayon lumineux, il est possible de régler la profondeur de pénétration de la lumière et donc de jouer sur l'épaisseur de la couche de polymère formée.

De plus, les polymérisations photoamorcées sont habituellement réalisées à température ambiante, avec des résignes ne contenant pas de solvants, ce qui réduit l'émission de gaz polluants.
Le rayonnement utilisé pour le processus de durcissement peut être un rayonnement électromagnétique, un rayonnement ionisant, un faisceau électronique et notamment un rayonnement IR, visible, UV, rayonnement X, rayonnement gamma.

Les propriétés du revêtement de surface peuvent être aisément adaptées et contrôlées par simple modification ou adaptation de la formulation du composant liquide photodurcissable, puisque c'est ce composant, qui en durcissant, formera le revêtement de surface.

Contrairement aux procédés connus de l'art antérieur, notamment dans le cas d'application de couches de peintures, le procédé de fabrication des chapes selon la présente invention ne nécessite pas l'utilisation de solvants, le rendant ainsi compatible avec les règlementations en matière d'hygiène, de sécurité et d'émission de composés organiques volatils.

Le composant minéral comprend :
- de 5 à 40%poids d' un ou plusieurs liants hydrauliques choisis parmi
   a) les ciments, de préférence choisis parmi les ciments alumineux, les ciments Portland, les ciments de mélanges pouzzolaniques comprenant éventuellement des cendres volantes, des laitiers de hauts fourneaux et/ou des pouzzolanes naturelles ou calcinées, les ciments sulfoalumineux, les ciments bélitiques et/ ou
   b) les sulfates de calcium,
- de 40 à 90%poids d'agrégats, granulats et/ou sables, de préférence siliceux, calcaires, et/ ou silicocalcaires,
- de 0 à 30 %poids de fillers ou charges calcaires et/ ou siliceux,
- de 0,01 à 20% poids d'additifs dont au moins un est un additif rhéologique plastifiant et/ ou superplastifiant.

Par définition, les liants hydrauliques sont des liants qui font prise de façon irréversible lorsqu'ils sont mi s en contact de l'eau.
Les granulats, agrégats et/ ou sables entrant dans la composition de mortier jouent notamment sur la rhéologie, la dureté ou l'aspect final du produit.

L'ensemble de ces constituants se trouve sous forme de poudre.

Le composant minéral comprend entre 0,01 et 20%poids rapporté à son poids, d'additifs donnant des propriétés particulières. Ces additifs peuvent être de nature organique, sans toutefois faire perdre au composant principal sa nature minérale. Au moins un des additifs est un agent autonivelant ou additif rhéologique, et permet de donner au mélange obtenu par ajout d'eau dans la composition la fluidité adaptée pour obtenir le caractère auto nivelant. Ces agents rhéologiques sont généralement des superplastifiants, c'est-à-dire des additifs permettant d'augmenter l'ouvrabilité des bétons ou mortiers. Les superplastifiants commercialisés sont essentiellement des tensioactifs polymères présentant soit des groupes acides sulfoniques ou sulfonates, soit des groupes carboxyliques ou carboxylates. On peut mentionner les polymères mélamine-formaldéhyde sulfonés, les polymères naphtalènes formaldéhyde sulfonés et les lignosulfates modifiés ou les dérivés polycarboxyliques, en particulier les pol yacryl at es ou les pol ymét acryl at es.
A titre d'exemple, on utilisera comme agent autonivelant un composé disponible commercialement et connu sous le nom de Melflux^{®} (éther polycarboxylique modifié commercialisé par la société BASF), ViscoCrete^{®} (polymère polycarboxylate commercialisé par la société Sika) ou Peramin^{®} (polymère mélamine sulfonés commercialisé par la société Peramin AB).

On citera par exemple, comme autres additifs contenus dans le composant minéral, d'autres agents rhéologiques, des agents rétenteurs d'eau, des agents entraîneurs d'air, des agents épaississants, des agents de protection biocides, des agents dispersants, des pigments, des accélérateurs et/ ou des retardateurs, des fibres ainsi que d'autres agents pour améliorer la prise, le durcissement, la stabilité des produits après application et notamment pour ajuster la couleur, l'ouvrabilité, la mise en oeuvre ou l'imperméabilité.

Le composant organique entrant dans la composition du kit selon la présente invention est une composition liquide photodurcissable, introduite en quantité variant entre 0,1 et 15%poids, de préférence entre 0,1 et 10 %poids rapporté à la masse de composant minéral. De façon très préférée, le composant organique est présent à hauteur de 0,1 à 5%poids.

La composition liquide photodurcissable comprend :
- jusqu'à 80%poids, rapporté à son poids total, d'au moins un oligomère insaturé, aromatiques ou aliphatiques, choisi parmi les polyuréthanes, les polyesters, les polyéthers, les esters de polyéthers, les époxys, les polymères oléfiniques (met)acrylés et les polysiloxanes, et/ou
- jusqu'à 90 % poids, rapporté à son poids total, d'au moins un monomère mono-, di-, tri- ou polyfonctionnel insaturé choisi parmi les acrylates et les mét hacryl at es, et
- entre 0,1 à 10 %poids, rapporté à son poids total, d'un ou plusieurs photoamorceurs.

Ladite composition liquide photodurcissable doit comprendre au moins un oligomère insaturé tel que décrit ci-dessus ou un monomère mono-ou polyfonctionnel tel que décrit ci-dessus et un photoamorceur. Elle peut également comprendre à la fois un oligomère et un monomère.

Sous le terme de monomère, on comprend toute espèce chimique constituée d'entités moléculaires dont chacune peut conduire à une ou plusieurs unités constitutives d'un polymère.
Un ol i gomère est une substance composée de molécules de masse moléculaire intermédiaire essentiellement constituées par la répétition en petit nombre d'atomes ou de groupes d'atomes, appelés unités constitutives et dérivant de molécules de faible masse moléculaire. Les oligomères peuvent notamment être composés de répétitions de monomères. Classiquement, les oligomères ont de poids moléculaires supérieurs à 1000 Daltons.

L'oligomère insaturé est présent à une concentration de 15 à 60% poids, préférentiellement de 25 à 35% poids, dans la composition liquide photo durcissable.

Le monomère est présent à une concentration de 20 à 70% poids, préférentiellement de 30 à 60% poids, dans la composition liquide photo durcissable.

Les monomères utilisés sont des monomères insaturés de type monofonctionnel ou polyfonctionnel.

De façon préférée, lorsque le monomère est monofonctionnel, il est choisi parmi l'acrylate d'éthyl-diéthylèneglycol (EDGA), l'acrylate de nonylphénol éthoxylé, l'acrylate de lauryle, l'acrylate de tridécyle, l'acrylate d'isodécyle (IDA), l'acrylate de 2- phénoxyéthyte (PEA), l'acrylate d' hexadécyl e, l'acrylate de tétrahydrofurfuryle, l'acrylate d'isobornyle, l'acrylate d'éthyle diéthylèneglycol, le caprolactame de vi nyl e, la moprholine d' acryl oyl e, l'acrylate de butanediol, la N-vinyl-2 pyrrolidone, l'acrylate d'octyldécyle, l'acrylate de 4-t-butylcyclohexyle (TBCH), l'acrylate de caprolactone, l'acrylate de dihydrodicyclopentadiényle, l'acrylate de 2-hydroxyéthyle, le méthacrylate de 2-hydroxyéthyle, le formamide de n-vinyle, l'acétate de vi nyl e et leurs mélangea

Lorsque le monomère est di-, tri- ou polyfonctionnel, il est choisi parmi le diacrylate de 1,6-hexanediole (HDDA), le diacrylate de tripopylèneglycol (TPGDA), le diacrylate de dipropylèneglycol (DPGDA) le diacrylate de polyéthylèneglycol (PEGDA), le diacrylate de néopentylgycol (NPGDA), le diacrylate de néopentylgycol éthoxylé, le diacrylate de néopentylgycol propoxylé, le diacrylate de tétraéthylèneglycol, le diacrylate de 1,4-butanediole (BDDA), le diacrylate de bisphénol A éthoxylé, le triacrylate de triméthylolpropane, le triacrylate de triméthylolpropane (TMPTA), le triacrylate de glycérol (GPTA), le triacrylate de pentaérythritol (PETA), le triacrylate de triméthylolpropane éthoxylé (EO-TMPTA), le triacrylate de glycéryle propoxylé, le triacrylate de triméthylolpropane, le triacrylate de pentaérythritol, le triacrylate de tris(2-hydroxyéthyl)isocyanurate, le tétracrylate de pentaérythritol (PETTA), le tétraacrylate de pentaérythritol éthoxylé, le tétracrylate de ditriméthylolpropane (DiTMPTTA), le pentacrylate de dipentaérythritol (DiPEPA), et leurs mélanges.

La composition liquide photodurcissable comprend un oligomère insaturé choisi parmi les résines de type époxy-acrylate, polyuréthane-acrylate, polyester uréthane-acrylate, polyester-acrylate, polyéther acrylate, caoutchoucs (met)acrylatés, époxyde bicycloaliphatique.

A titre d'exemples d'oligomères à base d'uréthane aromatique disponibles dans le commerce, on peut citer le Laromer® UA9031V (BASF), le BR-403 (Bomar), l'Ebecryl™215 (Cytec), le CN978 (Sartomer).
A titre d'exemples d'oligomères à base d'uréthane aliphatique disponibles dans le commerce, on peut citer le Laromer® 8739 (BASF), le Photomer 6210 (Cognis), l'Ebecryl™ 230 (Cytec), le Genomer 4425 (Rahn), le CN 9001 (Sartomer).
A titre d'exemples d'oligomères à base d'époxy disponibles dans le commerce, on peut citer le Laromer® LR 8986 (BASF), le Photomer 3015 (Cognis), l'Ebecryl™ 600 (Cytec), le Genomer 2235 (Pahn), le CN 104 (Sartomer).
A titre d'exemples d'oligomères à base de polyester disponibles dans le commerce, on peut citer le Laromer® LR8800 (BASF), l'Ebecryl™853 (Cytec), leCN 292 (Sartomer).
A titre d'exemples d'oligomères à base de polyéther disponibles dans le commerce, on peut citer l'Ebecryl™81 (Cytec), le Genomer 3364 (Rahn).
Le Ricacryl® 3500 (Sartomer) est un exemple d'oligomère de polybutadiène méthacrylé disponible dans le commerce.

La composition liquide photodurcissable doit également comprendre un ou plusieurs photoamorceurs choisis parmi :
- les photoamorceurs de type Norrish I tels que le 2-hydroxy-2-méthyl-1-phényl-1-propan-1-one, les éthers de benzoïne par exemple le méthyl éther de benzoïne, l'éthyl éther de benzoïne, le butyl éther de benzoïne et l'isopropyl éther de benzoïne, les dérivés de l'acétophénone par exemple la 2,2 diéthoxyacétophénone (DEAP), la 1-hydroxy-cyclohexyl acétophénone, la 2-hydroxy-2,2-diméthyl acétophénone (HDMA), la 2,2-diméthoxy-2-phényl acétophénone (DMPA), les cétals benzyliques, les hydroxyalkylphénones, les morphilinocétones, les oxydes d'acylphosphine, par exemple l'oxyde de 2,4, 6-triméthybenzoyl diphénylphosphine et l'oxyde de bis-(2,4, 6-triméthybenzoyl) phényl phosphine (BAPO)
- les photoamorceurs de type Norrish II tels que la benzophénone et ses dérivés comme la p-chloro benzophénone ou la p-phényl benzophénone, le benzyle, la xanthone, la thioxanthone et ses dérivés comme la 2-éthyl thioxanthone, la 2-chloro thioxanthone (2CTX), la 2-isopropyl thioxanthone ou la 1-chloro-4-propoxy thioxanthone, l'anthraquinone, lescétocoumarines.

Ces photoamorceurs sont de type radical aire et classés suivant le mécanisme de formation des radicaux. Les photoamorceurs de type Norrish I regroupe les produits qui ont une réaction monomoléculaire : la molécule impliquée se scinde en deux radicaux (coupure ou scission homolytique). Les photoamorceurs de type Norrish II regroupent les produits qui nécessitent un co-amorceur auquel ils pourront arracher un atome d'hydrogène.

La composition liquide photodurcissable peut ainsi comprendre en outre un agent favorisant l'amorçage de la réaction de polymérisation choisi parmi les amines tertiaires et leurs dérivés tels que le 4-(diméthylamino) benzoate d'éthyle, le 4-(diméthylamino) benzoate de 2-butoxyéthyle, le p-diméthylamino benzoate de 2-éthylhéxyle, la 4,4'-diéthyl-amino benzophénone, la triéthanolamine, la triéthylamine et la diméthyléthanolamine.

La composition liquide photodurcissable peut comprendre avantageusement divers additifs, de préférence choisis parmi les agents antibactériens, les agents antistatiques, les agents antimoussants, les améliorateurs de résistance, les agents antioxydants, les stabilisantes, les pigments, les agents mouillants.

Elle peut comprendre jusqu'à 15%poids d'additifs tels que décrits ci-dessus. De préférence, la teneur en additifs est comprise entre 0,5 et 10%poids et encore plus préférentiellement entre 0,5 et 7%poids d'additifs, rapporté au poids de la composition fluide photodurcissable.

La présente invention porte également sur le procédé de préparation de chapes ou de revêtement de sol autonivelants mettant en oeuvre le kit tel que décrit ci-dessus.

Le procédé de fabrication d'une chape ou revêtement de sol autonivelants comprend les étapes successives suivantes :
a) mélange des différents constituants du kit selon la présente invention avec une quantité d'eau suffisante pour obtenir une composition fluide,
b) application de la composition fluide obtenue par pompage, par pulvérisation ou par coulage sur la surface à recouvrir,
c) pré-séchage de la surface pendant une durée d'au moins 24 heures,
d) durcissement de la surface pré-séchée avec une source d'irradiation externe.

Selon un premier mode de réalisation, à l'étape a), on mélange d'abord le composant minéral et l'eau puis on ajoute ladite composition liquide photodurcissable au mélange obtenu.

Selon un second mode de réalisation, à l'étape a), on forme une solution en mélangeant la composition liquide photodurcissable avec l'eau, puis on mélange le composant minéral avec la solution formée.

Selon un troisième mode de réalisation, à l'étape a), on mélange le composant minéral avec ladite composition liquide photodurcissable, puis on ajoute l'eau au mélange obtenu.

La quantité d'eau introduite varie entre 10 et 30%poids rapporté au poids total des composants. La teneur en eau est ajustée en fonction des constituants et additifs présents.

L'application peut être faite par toute technique connue de l'homme du métier et notamment par pompage, par pulvérisation ou par coulage.
La composition fluide ainsi appliquée comprend la formulation photodurcisable.

Lors de l'application, une séparation de phase est opérée et la formulation photodurcissable a tendance à migrer vers la surface supérieure. Cette migration a lieu lors de l'étape de pré-séchage de la surface.

Après un temps d'attente d'au moins plusieurs heures, une étape de durcissement de la surface est opérée, utilisant une source d'irradiation externe, comme par exemple une source UV.

La présente invente porte également sur une composition fluide pour chapes ou revêtement de sol autonivelants comprenant un mélange, en pourcentage poids, de :
- 70 à 90%d'un mortier comprenant un liant hydraulique comprenant entre 0,01 et 20% poids rapporté au poids de mortier d'un ou plusieurs additifs dont un au moins est un adjuvant rhéologique de type plastifiant et/ ou superplastifiant,
- 0,1 à 15% de la composition liquide photodurcissable selon la revendication 3, et
- 10 à 30% d'eau.

Le mortier est de préférence préparé par mélange des différents constituants préalablement à la préparation de la composition pour chapes ou revêtement de sol autonivelants selon la présente invention. Il se trouve donc sous une forme «prêt à l'emploi ». La préparation de la composition pour chape ou revêtement de sol se fait par addition d'une quantité suffisante d'eau pour rendre la composition fluide.

Certains additifs entrant dans la composition pour chapes ou revêtement de sol autonivelants peuvent être introduits au moment de la préparation du mortier, ou directement lors du mélange des différents constituants de ladite composition.

Une fois préparée, la composition obtenue est appliquée sur la surface à recouvrir.
Cette composition est prête à être appliquée sur la surface à recouvrir, et les étapes b) à d) du précédé décrit ci-dessus sont effectuées.

L'application peut être faite par toute technique connue de l'homme du métier et notamment par pompage, par pulvérisation ou par coulage.
La composition ainsi appliquée comprend la formulation photodurcissable.

Lors de l'application, une séparation de phase est opérée et la formulation photodurcissable a tendance à migrer vers la surface supérieure. Cette migration a lieu lors de l'étape de pré-séchage de la surface.

Après un temps d'attente d'au moins plusieurs heures, une étape de durcissement de la surface est opérée, utilisant une source d'irradiation externe, comme par exemple une source UV.

Le revêtement est ainsi durci par l'irradiation.

Les chapes ou revêtements de sol obtenus par ce procédé de fabrication comprennent donc une couche de revêtement de surface formé directement lors de l'application de la chape ou du revêtement.
Les propriétés et fonctionnalités de ce revêtement peuvent aisément être adaptées en jouant sur les additifs ajoutés dans la composition de la chape autonivelante.

Si l'utilisateur le souhaite, les chapes ou revêtements de sol selon la présente invention peuvent être revêtues de façon classique par des traitements de surface connus de l'homme du métier.

L'invention est illustrée de manière non-limitative par les exemples donnés ci-dessous.

### Exemples

### Exemple 1 : comparaison de différentes applications d'un revêtement photodurcissable

250 g de composition de mortier à base de ciment comprenant un agent autonivelant (Weber.Vetonit 3100, Saint Gobain Weber) est mélangé avec 65 g d'eau.
La formulation ainsi obtenue est utilisée dans les exemples suivants.

Différents échantillons sont préparés à partir de la formulation obtenue selon l'exemple 1.

Echantillon de référence : environ 20 g de la formulation de l'exemple 1 est versée dans un bécher en plastique d'un diamètre de 4 cm, sur une épaisseur d'environ 1 cm et est laissée pendant 3 jours à température ambiante pour durcissement, constituant ainsi une couche de mortier.

Echantillon 1 : Une formulation comprenant une résine photodurcissable à base de polyester, commercialisée par GreenLights Coatings sous le nom GL 5891, est versée, par application manuelle, sur la surface durcie de l'échantillon de référence.
La résine thermodurcissable est ensuite durcie par irradiation avec un convoyeur DYMAX UVC-5 pour réticulation par UV.

Echantillon 2 : A la formulation de mortier préparée ci-dessus, on ajoute 10% poids de la composition liquide photodurcissable à base de polyester GL 5891. Le mélange est versé dans un bécher en plastique d'un diamètre de 4 cm, sur une épaisseur d'environ 1 cm et est laissée pendant 48 heures à température ambiante pour permettre l'autonivelement et la migration de la résine vers la surface.
La résine photodurcissable est ensuite durcie par irradiation avec un convoyeur DYMAX UVC-5 pour réticulation par UV.

Echantillon 3 : environ 20 g de la formulation de mortier préparée ci-dessus est versée dans un bécher en plastique d'un diamètre de 4 cm, sur une épaisseur d'environ 1 cm et environ une quantité d'une résine photodurcissable à base de polyester GL5891 correspondant à 10%poids par rapport à la formulation de l'exemple 1 est déposée par goutte à goutte sur la surface de la composition de mortier non durcie. Le système est laissé à température ambiante pendant 48 heures puis est durci par irradiation avec un convoyeur DYMAX UVG5 pour réticulation par UV.

Les différents échantillons obtenus sont examinés visuellement et au microscope électronique à balayage.
Les résultats obtenus montrent que le revêtement de surface de l'échantillon 1 est relativement dur et ne présente pas de piqûres mais présente des problèmes d'adhésion sur la couche de mortier.
L'échantillon 2, qui correspond à une composition conforme à la présente invention, présente une couche de résine épaisse avec une dureté élevée et également sans piqûres. L'analyse au microscope électronique à balayage de cet échantillon montre que la couche de résine est ancrée dans la couche de mortier, permettant ainsi une bonne adhésion de la couche de revêtement.

L'échantillon 3 présente une couche de revêtement supérieure épaisse mais séparée de la surface de la couche de mortier. Des craquelures sont apparues sur la surface du revêtement pendant le durcissement par UV, en raison d'un manque d'adhésion et de tensions internes. Le dépôt par goutte à goutte ne permet pas d'améliorer les problèmes d'adhésion rencontrés avec l'échantillon 1.

L'absence d'adhésion est observée par examen visuel.

### Exemple 2 : Influence de la quantité de composition liquide photodurcissable introduite dans la composition de la chape autonivelante.

Différents d'échantillons sont préparés par mélange d'environ 20 g de la formulation comme préparée dans l'exemple 1 avec une quantité variant enture.0,05 et 15% poids d'une formulation de résine à base de polyester (GL5891) et sont versés dans un bécher en plastique d'un diamètre de 4 cm, sur une épaisseur d'environ 1 cm.
Les échantillons sont laissés pendant 48 heures à température ambiante pour permettre l'autonivelement et la migration de la résine vers la surface.
La résine thermodurcissable est ensuite durcie par irradiation avec un convoyeur DYMAX UVC-5 pour réticulation par UV.

Les échantillons une fois durcis sont examinés visuellement et un test d'absorption d'eau est réalisé en observant la façon dont une goutte d'eau est absorbée à la surface.

Les résultats obtenus montrent que la quantité de résines thermodurcissables introduite dans la composition modifie significativement les propriétés de surface du revêtement obtenu et confirment notamment les résultats obtenus dans l'exemple 2. Une quantité trop importante de résine, notamment supérieure à 7,5% poids, a tendance à réduire l'adhésion de la couche de revêtement à la couche de mortier.

La mouillabilité de la couche de mortier est affectée par l'addition de résine, même à faible quantité.

Les résultats de ces tests sont présentés dans le tableau 1 ci-dessous.

**Tableau 1**

| N° échantillon | % poids de rési ne aj out ée par rapport au poids de mortier | Adhésion à la couche de mortier | Visibilité d'une goutte d'eau après 5 secondes | Visibilité d'une goutte d'eau après 30 secondes |
|---|---|---|---|---|
| Référence | 0 | n.d | - | - |
| 1 | 0,05 | - | - | - |
| 2 | 0,1 | + | +/- | - |
| 3 | 0,5 | + | + | - |
| 4 | 1,0 | + | + | - |
| 5 | 2,0 | + | + | - |
| 6 | 2,5 | + | + | +/- |
| 7 | 5,0 | + | + | +/- |
| 8 | 7,5 | +/- | + | + |
| 9 | 10,0 | - | + | + |
| 10 | 15,0 | - | + | + |

| | | | | |
|---|---|---|---|---|
| n.d : non déterminée | | | | |

### Exemple 3: influence de la formulation du composant organique sur le revêtement final de la chape

Cinq différentes formulations à base d'acrylates ont été testées dans des compositions de mortiers. Leurs propriétés rhéologiques et d'autonivelement ont été étudiées. Le produit Vetonit 3100 (Weber Saint-Gobain) est mélangé avec de l'eau avec un rapport pondéral 74/26 et 1%poids d'une résine à base d'acrylate a été mélangé à la formulation de mortier. A titre de comparaison, un échantillon sans résine acrylate est également préparé. Les différentes compositions des formulations de résines sont données dans le tableau 2.

**Tableau 2 : Spécifications des oligomères et monomères utilisés dans les formulations de résines acrylates.**

| ***N° échan tillon*** | ***Type d'oligomère (nom du produit* /*fournisseur)*** | ***Quantité en % poids,*** | ***Type de monomère 1 (nom du produit*/*fournisseur*)** | ***Quantité en % poids*** | ***Type de monomère 2 (nom du produit*/*fournisseur*)** | ***Quantité en % poids*** |
|---|---|---|---|---|---|---|
| 1 | Polyurethane (Laromer®LR8987 / BASF | 65 | Triacrylate (Laromer® TMPTA/BASF) | 20 | Monoacrylate (Laromer® TBCH / BASF) | 15 |
| 2 | Epoxybased (Laromer®LR8986 / BASF) | 65 | Triacrylate (Laromer® TMPTA / BASF) | 20 | Monoacrylate (Laromer® TBCH / BASF) | 15 |
| 3 | Polyester (Laromer® LR 8800/ BASF) | 65 | Triacrylate (Laromer® TMPTA / BASF) | 20 | Monoacrylate (Laromer® TBCH / BASF) | 15 |
| 4 | Polyether (PO 43 F / BASF) | 65 | Triacrylate (Laromer® TMTA / BASF) | 20 | Monoacrylate (Laromer® TBCH / BASF) | 15 |
| 5 | Polybutadiene mét hacryl é (Rcacryl™ 3500 / Sartomer | 61 | Triacrylate (Laromer® TMPTA / BASF) | 19 | Monoacrylate (Laromer® TBCH / BASF) | 20 |

Les différents constituants des formulations de résines sont mélangés entre eux et vigoureusement agités.
Les mesures d'écoulement et tests de rhéologie ont été effectués directement après le mélange de la formulation de résine avec la composition de mortier.
Des échantillons de forme circulaire d'une épaisseur de 10 mm ont été fabriqués dans des moules d'un diamètre de 150 mm. On laisse les échantillons se solidifier pendant au moins 48 h.

### Tests

Les propriétés rhéologiques ont été testées par des mesures d'écoulement et de viscosimètre Brookfield. Le test d'écoulement a été réalisé selon une méthode de mesure dérivée de la norme EN 12706, avec un anneau d'écoulement d'un diamètre de 68 mm et d'une hauteur de 35 mm, correspondant à un volume total de 127 cm³.

La brillance des échantillons est mesurée avec un compteur micro-gloss BYK une fois que la composition de mortier autonivelante est solidifiée. La surface de l'échantillon, ainsi que la structure massive après découpe perpendiculaire par rapport à la surface ont été observées au microscope.

Les résultats obtenus sont présentés dans le tableau 3 ci-dessous :

**Tableau 3**

| ***Echantillon*** | ***Viscosité Brookfield après 10 min en cP*** | ***Viscosité Brookfield après 20 min en cP*** | ***Temps d'écoulement en s*** | ***% de brillance*** |
|---|---|---|---|---|
| Reference | 7186 | 8623 | 48 | 7,8 |
| 1 | 4686 | 6811 | 42 | 8,4 |
| 2 | 5499 | 6686 | 39 | 8,4 |
| 3 | 6124 | 7248 | 40 | 1,4 |
| 4 | 4124 | 5249 | 47 | 10,6 |
| 5 | 5499 | 6686 | 43 | 3,8 |

La viscosité Brookfield des mortiers autonivelants est dimininuée lorsqu'on ajoute des compositions à base de résines. Le temps d'écoulement est également plus court pour toutes les résines, même si la composition de la résine à base de polyéther est voisine de l'échantillon de référence. La brillance est modifiée par ajout de la résine, quelque soi t sa composition. Des changements de brillance sont particulièrement notables pour des résines à base de polyester, polyéther et polybutadiène méthacrylé, ce qui montre bien que la couche de surface des mortiers a un aspect différent suivant les composants de la résine.

Les échantillons de mortiers solidifiés ont été analysés par microscopie, en surface et également en volume. Ces analyses ont montré que les échantillons contenant des formulations de résines ont développé des couches superficielles différentes de celle de l'échantillon de référence et dont la morphologie est également différente de celle du reste de l'échantillon.

## Revendications

1. Kilt pour la préparation d'une chape ou d'un revêtement de sol autonivelants **caractérisé en ce qu'**il comprend :
- un composant minéral qui est un mortier autonivelant sous forme de poudre comprenant un ou plusieurs additifs dont au moins un est un additif rhéologique de type plastifiant et/ou superplastifiant, la quantité d'additifs étant comprise entre 0,01 et 20%poids rapporté au poids de mortier, et
- 0,1 à 15%poids par rapport au composant minéral, de préférence 0,1 à 10% poids, d'un composant organique qui est une composition liquide photodurcissable.

2. Kit selon la revendication 1 **caractérisé en ce que** le composant minéral comprend :
- de 5 à 40%poids d' un ou plusieurs liants hydrauliques choisis parmi
a) les ciments, de préférence choisis parmi les ciments alumineux, les ciments Portland, les ciments de mélanges pouzzolaniques comprenant éventuellement des cendres volantes, des laitiers de haut s fourneaux et/ ou des pouzzolanes naturelles ou calcinées, les ciments sulfoalumineux, les ci ment s bélitiques et/ ou
b) les sulfates de calcium,
- de 40 à 90% poids d' agrégats, granulats et/ou sables, de préférence siliceux, calcaires, et/ ou silicocalcaires,
- de 0 à 30 %poids de fillers ou charges calcaires et / ou siliceux,
- de 0,01 à 20%poids d'additifs dont un au moins est un additif rhéologique plastifiant et/ ou superplastifiant.

3. Kit selon l'une des revendications 1 ou 2 **caractérisé en ce que** ladite composition liquide photodurcissable comprend
- jusqu'à 80% poids, rapporté à son poids total, d'au moins un oligomère insaturé aromatiques ou aliphatiques choisi parmi les polyuréthanes, les polyesters, les polyéthers, les esters de polyéthers, les époxys, les polymères oléfiniques (met)acrylés et les polysiloxanes, et/ ou
- jusqu'à 90 %poids, rapporté à son poids total, d'au moins un monomère mono-, di-, tri- ou polyfonctionnel insaturé choisi parmi les acrylates et les méthacrylates, et
- entre 0,1 à 10 % poids, rapporté à son poids total, d'un ou plusieurs photoamorceurs.

4. Kit selon la revendication 3 **caractérisé en ce que** le monomère monofonctionnel est choisi parmi l'acrylate d'éthyl-diéthylèneglycol (EDGA), l'acrylate de nonylphénol éthoxylé, l'acrylate de lauryle, l'acrylate de tridécyle, l'acrylate d'isodécyle (IDA), l'acrylate de 2- phénoxyét hyl e (PEA), l'acrylate d'hexadécyle, l'acrylate de tétrahydrofurfuryle, l'acrylate d'isobornyle, l'acrylate d'éthyle diéthylèneglycol, le caprolactame de vinyle, la moprholine d'acryloyle, l'acrylate de butanediol, la N-vinyl-2 pyrrolidone, l'acrylate d'octyldécyle, l'acrylate de 4-t-butylcyclohexyle (TBCH), l'acrylate de caprolactone, l'acrylate de dihydrodicyclopentadiényle, l'acrylate de 2-hydroxyéthyle, le méthacrylate de 2-hydroxyéthyle, le formamide de n-vinyle, l'acétate de vinyle, seul ou en mél ange.

5. Kilt selon la revendication 3 **caractérisé en ce que** le monomère di-, tri-, polyfonctionnel est choisi parmi le diacrylate de 1,6-hexanediole (HDDA), le diacrylate de tripopylèneglycol (TPGDA), le diacrylate de dipropylèneglycol (DPGDA) le diacrylate de polyéthylèneglycol (PEGDA), le diacrylate de néopentylgycol (NPGDA), le diacrylate de néopentylgycol éthoxylé, le diacrylate de néopentylgycol propoxylé, le diacrylate de tétraéthylèneglycol, le diacrylate de 1,4-butanediole (BDDA), le diacrylate de bisphénol A éthoxylé, le triacrylate de triméthylolpropane, le triacrylate de triméthylolpropane (TMPTA), le triacrylate de glycérol (GPTA), le triacrylate de pentaérythritol (PETA), le triacrylate de triméthylolpropane éthoxylé, le triacrylate de glycéryle propoxylé, le triacrylate de triméthylolpropane, le triacrylate de pentaérythritol, le triacrylate de tris (2-hydroxyéthyl)isocyanurate, le tétracrylate de pentaérythritol (PETTA), le tétraacrylate de pentaérythritol éthoxylé, le tétracrylate de ditriméthylolpropane (DiTMPTTA), le pentacrylate de dipentaérythritol (DiPEPA), seul ou en mélange.

6. Kit selon l'une des revendications 3 à 5 caractérisé en l'oligomère insaturé est choisi parmi les résines de type époxy-acrylate, polyuréthane-acrylate, polyester uréthane-acrylate, polyester-acrylate, polyéther acrylate, caoutchouc (met)acrylé, époxyde bi cycloatiphatique.

7. Kilt selon l'une des revendications 3 à 6 caractérisé en ce le photoamorceur est choisi parmi :
- les photoamorceurs de type Norrish I tels que le 2-hydroxy-2-méthyl-1-phényl-1-propan-1-one, les éthers de benzidine par exemple le méthyl éther de benzoïne, l' ét hyl éther de benzoïne, le butyl éther de benzoïne et l'isopropyl éther de benzoïne, les dérivés de l'acétophénone par exemple la 2,2 diéthoxyacétophénone (DEAP), la 1-hydroxy-cyclohexyl acétophénone, la 2-hydroxy-2,2-diméthyl acétophénone (HDMA), la 2,2-diméthoxy-2-phényl acétophénone (DMPA), les cétals benzyliques, les hydroxyal kyl phénones, les morphilinocétones, les oxydes d'acylphosphine, par exemple l'oxyde de 2,4,6-triméthybenzoyl diphénylphosphine et l'oxyde de bris-(2,4,6-triméthybenzoyl) phényl phosphine
- les photoamorceurs de type Norrish II tels que la benzophénone et ses dérivés comme la p-chloro benzophénone ou la p-phényl benzophénone, le benzyle, la xanthone, la thioxanthone et ses dérivés comme la 2-éthyl thioxanthone, la 2-chloro thioxanthone (2CTX), la 2-isopropyl thioxanthone ou la 1-chloro-4-propoxy thioxanthone, l'anthraquinone, lescétocoumarines.

8. Kit selon l'une des revendications 1 à 7 **caractérisé en ce que** ladite composition fluide photopolymérisable comprend en outre un agent favorisant l'amorçage de la réaction de polymérisation choisi parmi les amines tertiaires et leurs dérivés tels que le 4-(diméthylamino) benzoate d'éthyle, le 4-(diméthylamino) benzoate de 2-butoxyéthyle, le p-diméthylamino benzoate de 2-éthylhéxyle, la 4,4'-diéthyl-amino benzophénone, la triéthanolamine, la triéthylamine et la diméthyléthanolamine.

9. Kit selon l'une des revendications 3 à 8 **caractérisé en ce que** l'oligomère insaturé est présent à une concentration de 15 à 60%poids, préférentiellement de 25 à 35%poids, dans la composition liquide photodurcissable.

10. Kit selon l'une des revendications 3 à 9 **caractérisé en ce que** le monomère est présent à une concentration de 20 à 70% poids, préférentiellement de 30 à 60% poids, dans la composition liquide photodurcissable.

11. Kit selon l'une des revendications précédentes **caractérisé en ce que** ladite composition liquide comprend en outre entre 0 et 15%poids, de préférence entre 0,5 et 10%poids et encore plus préférentiellement entre 0,5 et 7%poids d'additifs choisis, de préférence, parmi les agents antibactériens, les agents antistatiques, les agents antimoussants, les améliorateurs de résistance, les agent s antioxydants.

12. Procédé de fabrication d'une chape ou d'un revêtement de sol autonivelants **caractérisé en ce qu'**il comporte les étapes successives suivantes:
a) mélange des différents constituants du kit selon l'une des revendications 1 à 11 avec une quantité d'eau suffisante pour obtenir une composition fluide,
b) application de la composition fluide obtenue par pompage, par pulvérisation ou par coulage sur la surface à recouvrir,
c) pré-séchage de la surface pendant une durée d'au moins 24 heures,
d) durcissement de la surface pré-séchée avec une source d'irradiation externe.

13. Procédé selon la revendication 12 **caractérisé en ce que**, à l'étape a), on mélange d'abord le composant minéral et l'eau puis on ajoute ladite compostion liquide photodurcissable au mélange obtenu.

14. Procédé selon la revendication 12 **caractérisé en ce que**, à l'étape a), on forme une solution en mélangeant la compostion liquide photodurcissable avec l'eau, puis on mélange le composant minéral avec la solution formée.

15. Procédé selon la revendication 12 **caractérisé en ce que**, à l'étape a), on mélange le composant minéral avec ladite composition liquide photodurcissable, puison ajoute l'eau au mélange obtenu.

16. Composition fluide pour la fabrication de chapes ou de revêtement de sol autonivelants **caractérisée en ce qu'**elle comprend un mélange, en pourcentage poids, de :
- 70 à 90%d'un mortier comprenant un liant hydraulique comprenant entre 0,01 et 20%poids rapporté au poids de mortier d'un adjuvant rhéologique de type plastifiant et/ou superplastifiant,
- 0,1 à 15%de la composition liquide photodurcissable selon la revendication 3, et
- 10 à 30%d'eau.

17. Chape ou revêtement de sol autonivelants susceptible d'être obtenue par le procédé selon l'une des revendications 12 à 15 ou à partir de la composition selon la revendication 16.

## Patentansprüche

1. Kit zur Herstellung einer selbstnivellierenden Bodenbeschichtung oder eines selbstnivellierenden Bodenbelags, **dadurch gekennzeichnet, dass** es Folgendes enthält:
- einen mineralischen Bestandteil, der ein selbstnivellierender Mörtel in Pulverform ist, der einen oder mehrere Zusatzstoffe enthält, von denen mindestens einer ein rheologischer Zusatzstoff des Weichmacher- und/oder Super-Weichmacher-Typs ist; wobei die Menge an Zusatzstoffen zwischen 0,01 und 20 Gew.-% bezogen auf das Mörtelgewicht beträgt, und
- 0,1 bis 15 Gew.-% bezogen auf den mineralischen Bestandteil, vorzugsweise 0,1 bis 10 Gew.-%, eines organischen Bestandteils, der eine lichthärtende flüssige Zusammensetzung ist.

2. Kit nach Anspruch 1, **dadurch gekennzeichnet, dass** der mineralische Bestandteil Folgendes enthält:
- 5 bis 40 Gew.-% einer oder mehrerer hydraulischer Bindemittel, die ausgewählt sind aus
a) den Zementen, vorzugsweise ausgewählt aus den Aluminat-Zementen, den Portland-Zementen, den Puzzolan-Mischzementen, die gegebenenfalls Flugaschen, Hochofenschlacken und/oder natürliche oder kalzinierte Puzzolane enthalten, den Sulfo-Aluminat-Zementen, den Belit-Zementen und/oder
b) den Calciumsulfaten,
- 40 bis 90 % Gew.-% Aggregate, Zuschlagsstoffe und/oder Sande, die vorzugsweise kieselhaltig, kalkhaltig und/oder kalksandsteinhaltig sind,
- 0 bis 30 Gew.-% kalkhaltige und/oder kieselhaltige Füller oder Füllstoffe,
- 0,01 bis 20 Gew.-% Zusatzstoffe, von denen mindestens einer ein rheologischer Weichmacher- und/oder Super-Weichmacher-Zusatzstoff ist.

3. Kit nach einem der Ansprüche 1 oder 2, **dadurch gekennzeichnet, dass** die lichthärtende flüssige Zusammensetzung Folgendes enthält:
- bis zu 80 Gew.-%, bezogen auf ihr Gesamtgewicht, mindestens eines aromatischen oder aliphatischen ungesättigten Oligomers, das ausgewählt ist aus den Polyurethanen, den Polyestern, den Polyethern, den Polyetherestern, den Epoxiden, den (meth)acrylierten Olefin-Polymeren und den Polysiloxanen, und/oder
- bis zu 90 Gew.-%, bezogen auf ihr Gesamtgewicht, mindestens eines ungesättigten mono-, bi-, tri- oder polyfunktionellen Monomers, das ausgewählt ist aus den Acrylaten und Methacrylaten, und
- zwischen 0,1 und 10 Gew.-%, bezogen auf ihr Gesamtgewicht, eines oder mehrerer Fototinitiatoren.

4. Kit nach Anspruch 3, **dadurch gekennzeichnet, dass** das monofunktionelle Monomer ausgewählt ist aus Diethylenglycolethylacrylat (EDGA), ethyloxiertem Nonylphenolacrylat, Laurylacrylat, Tridecylacrylat, Isodecylacrylat (IDA), 2-Phenoxyethylacrylat (PEA), Hexadecylacrylat, Tetrahydrofurfurylacrylat, Isobornylacrylat, Diethylenglycolethylacrylat, Vinylcaprolactam, Acryloylmorpholin, Butandiolacrylat, N-Vinyl-2-pyrrolidon, Octyldecylacrylat, 4-t-Butylcyclohexylacrylat (TBCH), Caprolactonacrylat, Dihydrodicyclopentadienylacrylat, 2-Hydroxyethylacrylat, 2-Hydroxyethylmethacrylat, n-Vinylformamid, Vinylacetat, allein oder im Gemisch.

5. Kit nach Anspruch 3, **dadurch gekennzeichnet, dass** das bi-, tri-, polyfunktionelle Monomer ausgewählt ist aus 1,6-Hexanedioldiacrylat (HDDA), Tripopylenglykoldiacrylat (TPGDA), Dipropylenglykoldiacrylat (DPGDA), Polyethylenglykoldiacrylat (PEGDA), Neopentylglykoldiacrylat (NPGDA), ethyloxiertem Neopentylglykoldiacrylat, propoxyliertem Neopentylglykoldiacrylat, Tetraethylenglykoldiacrylat, 1,4-Butandioldiacrylat (BDDA), ethyloxiertem Bisphenoldiacrylat A, Trimethylolpropantriacrylat, Trimethylolpropantriacrylat (TMPTA), Glyceroltriacrylat (GPTA), Pentaerythritoltriacrylat (PETA), eloxiertem Trimethylolpropantriacrylat, propoxyliertem Glyceryltriacrylat, Trimethylolpropantriacrylat, Pentaerythritoltriacrylat, Tris(2-Hydroxyethyl)-Isocyanurattriacrylat, Pentaerythritoltetracrylat (PETTA), ethyloxiertem Pentaerythritoltetracrylat, Ditrimethylolpropantetracrylat (DiTMPTTA), Dipentaerythritolpentacrylat (DiPEPA), allein oder im Gemisch.

6. Kit nach einem der Ansprüche 3 bis 5, **dadurch gekennzeichnet, dass** das ungesättigte Oligomer ausgewählt ist aus den Harzen des Typs Epoxyacrlyat, Polyurethanacrylat, Polyesterurethanacrylat, Polyesteracrylat, Polyetheracrylat, (met)acryliertes Kautschuk, bicycloaliphatisches Exoxid.

7. Kit nach einem der Ansprüche 3 bis 6, **dadurch gekennzeichnet, dass** der Fotoinitiator ausgewählt ist aus
- den Fototinitiatoren des Typs Norrish I wie 2-Hydroxy-2-methyl-1-phenyl-1-propan-1-on, den Benzoinethern zum Beispiel Benzoinmethylether, Benzoinethylether, Benzoinbutylether und Benzoinisopropylether, den Acetophenon-Derivaten zum Beispiel 2,2-Diethoxyacetophenon (DEAP), 1-Hydroxycyclohexylacetophenon, 2-Hydroxy-2,2-dimethylacetophenon (HDMA), 2,2-Dimethoxy-2-phenylacetophenon (DMPA), den Benzylketalen, den Hydroxyalkylphenonen, den Morpholin-Ketonen, den Acylphosphinoxiden, zum Beispiel 2,4,6-Trimethybenzoyl-diphenylphosphinoxid und Diphenyl(2,4,6-trimethylbenzoyl)-phosphinoxid,
- den Fototinitiatoren des Typs Norrish II wie Benzophenon und dessen Derivaten wie p-Chlorobenzophenon oder p-Phenylbenzonphenon, Benzyl, Xanthon, Thioxanthon und dessen Derivaten wie 2-Ethylthioxanthon, 2-Chlorothioxanthon (2CTX), 2-Isopropylthioxanthon oder 1-Chloro-4-propoxythioxanthon, Anthrachinon, den Ketocumarinen.

8. Kit nach einem der Ansprüche 1 bis 7, **dadurch gekennzeichnet, dass** die fotopolymerisierbare fluidische Zusammensetzung ferner einen das Auslösen der Polymerisierungsreaktion begünstigenden Wirkstoff enthält, der ausgewählt ist aus den tertiären Aminen und deren Derivaten wie 4-(Dimethylamino)-ethylbenzoat, 2-Butoxyethyl-4-(dimethylamino)benzoat, 2-Ethylhexyl-p-dimethylaminobenzoat, 4,4'-Diethylaminobenzophenon, Triethanolamin, Triethylamin und Dimethylethanolamin.

9. Kit nach einem der Ansprüche 3 bis 8, **dadurch gekennzeichnet, dass** das ungesättige Oligomer in der lichthärtenden flüssigen Zusammensetzung in einer Konzentration von 15 bis 60 Gew.-%, vorzugsweise von 25 bis 35 Gew.-% vorhanden ist.

10. Kit nach einem der Ansprüche 3 bis 9, **dadurch gekennzeichnet, dass** das Monomer in der lichthärtenden flüssigen Zusammensetzung in einer Konzentration von 20 bis 70 Gew.-%, vorzugsweise 30 bis 60 Gew.-% vorhanden ist.

11. Kit nach einem der vorhergehenden Ansprüche, **dadurch gekennzeichnet, dass** die flüssige Zusammensetzung ferner zwischen 0 und 15 Gew.-%, vorzugsweise zwischen 0,5 und 10 Gew.-% und noch weiter bevorzugt zwischen 0,5 und 7 Gew.-% Zusatzstoffe enthält, die vorzugsweise ausgewählt sind aus den antibakteriellen Wirkstoffen, den antistatischen Wirkstoffen, den Schaumverhütungsmitteln, den Zähigkeitsverbesserern, den Antioxidationsmitteln.

12. Verfahren zum Herstellen einer selbstnivellierenden Bodenbeschichtung oder eines selbstnivellierenden Bodenbelags, **dadurch gekennzeichnet, dass** es die folgenden aufeinanderfolgenden Schritte aufweist:
a) Mischen der verschiedenen Bestandteile des Kits nach einem der Ansprüche 1 bis 11 mit einer zum Herstellen einer fluidischen Zusammensetzung ausreichenden Wassermenge,
b) Auftragen der hergestellten fluidischen Zusammensetzung auf der zu bedeckenden Oberfläche durch Pumpen, Zerstäuben oder Gießen,
c) Vortrocknen der Oberfläche über einen Zeitraum von mindestens 24 Stunden,
d) Härten der vorgetrockneten Oberfläche mit einer externen Strahlungsquelle.

13. Verfahren nach Anspruch 12, **dadurch gekennzeichnet, dass** in Schritt a) zunächst der mineralische Bestandteil und das Wasser gemischt werden und dann die lichthärtende flüssige Zusammensetzung dem hergestellten Gemisch zugegeben wird.

14. Verfahren nach Anspruch 12, **dadurch gekennzeichnet, dass** in Schritt a) eine Lösung gebildet wird, indem die lichthärtende flüssige Zusammensetzung mit dem Wasser gemischt wird und dann der mineralische Bestandteil mit der gebildeten Lösung gemischt wird.

15. Verfahren nach Anspruch 12, **dadurch gekennzeichnet, dass** in Schritt a) zunächst der mineralische Bestandteil mit der lichthärtenden flüssigen Zusammensetzung gemischt wird und dann das Wasser dem erhaltenen Gemisch zugegeben wird.

16. Fluidische Zusammensetzung zum Herstellen einer selbstnivellierenden Bodenbeschichtung oder eines selbstnivellierenden Bodenbelags, **dadurch gekennzeichnet, dass** sie ein Gemisch, in Gewichtsanteilen, enthält von
- 70 bis 90 % eines Mörtels, der ein hydraulisches Bindemittel enthält, das zwischen 0,01 und 20 Gew.-% bezogen auf das Mörtelgewicht eines rheologischen Adjuvans des Weichmachertyps und/oder Super-Weichmacher-Typs enthält,
- 0,1 bis 15 % der lichthärtenden flüssigen Zusammensetzung nach Anspruch 3 und
- 10 bis 30 % Wasser.

17. Selbstnivellierende Bodenbeschichtung oder selbstnivellierender Bodenbelag, die bzw. der durch das Verfahren nach einem der Ansprüche 12 bis 15 oder aus der Zusammensetzung nach Anspruch 16 herstellbar ist.

## Claims

1. Kit for the preparation of a self-levelling screed or overlayment, **characterized in that** it comprises:
- an inorganic component which is a self-levelling mortar in the powder form comprising one or more additives, at least one of which is a rheological additive of plasticizer and/or superplasticizer type, the amount of additives being between 0.01 and 20% by weight, with respect to the weight of mortar, and
- from 0.1 to 15% by weight, with respect to the inorganic component, preferably from 0.1 to 10% by weight, of an organic component which is a liquid photocurable composition.

2. Kit according to Claim 1, **characterized in that** the inorganic component comprises:
- from 5 to 40% by weight of one or more hydraulic binders chosen from:
a) cements, preferably chosen from high-alumina cements, Portland cements, cements formed of pozzolanic mixtures optionally comprising fly ash, blast furnace slags and/or natural or calcined pozzolanes, sulphoaluminate cements, belite cements and/or
b) calcium sulphates,
- from 40 to 90% by weight of aggregates and/or sands, preferably based on silica, limestone and/or silica/limestone,
- from 0 to 30% by weight of limestone and/or silica fillers.
- from 0.01 to 20% by weight of additives, at least one of which is a plasticizing and/or superplasticizing rheological additive.

3. Kit according to either of Claims 1 and 2, **characterized in that** the said liquid photocurable composition comprises:
- up to 80% by weight, with respect to its total weight, of at least one unsaturated oligomer, which are aromatic or aliphatic, chosen from polyurethanes, polyesters, polyethers, polyetheresters, epoxys, (meth)acrylated olefinic polymers and polysiloxanes, and/or
- up to 90% by weight, with respect to its total weight, of at least one unsaturated mono-, di-, tri- or polyfunctional monomer chosen from acrylates and methacrylates, and
- between 0.1 and 10% by weight, with respect to its total weight, of one or more photoinitiators.

4. Kit according to Claim 3, **characterized in that** the monofunctional monomer is chosen from ethyl diethylene glycol acrylate (EDGA), ethoxylated nonylphenol acrylate, lauryl acrylate, tridecyl acrylate, isodecyl acrylate (IDA), 2-phenoxyethyl acrylate (PEA), hexadecyl acrylate, tetrahydrofurfuryl acrylate, isobornyl acrylate, vinyl caprolactam, acryloylmorpholine, butanediol acrylate, N-vinyl-2-pyrrolidone, octyldecyl acrylate, 4-(t-butyl)cyclohexyl acrylate (TBCH), caprolactone acrylate, dihydrodicyclopentadienyl acrylate, 2-hydroxyethyl acrylate, 2-hydroxyethyl methacrylate, N-vinylformamide or vinyl acetate, alone or as a mixture.

5. Kit according to Claim 3, **characterized in that** the di-, tri- or polyfunctional monomer is chosen from 1,6-hexanediol diacrylate (HDDA), tripropylene glycol diacrylate (TPGDA), dipropylene glycol diacrylate (DPGDA), polyethylene glycol diacrylate (PEGDA), neopentyl glycol diacrylate (NPGDA), ethoxylated neopentyl glycol diacrylate, propoxylated neopentyl glycol diacrylate, tetraethylene glycol diacrylate, 1,4-butanediol diacrylate (BDDA), ethoxylated bisphenol A diacrylate, trimethylolpropane triacrylate (TMPTA), glycerol triacrylate (GPTA), pentaerythritol triacrylate (PETA), ethoxylated trimethylpropane triacrylate, propoxylated glyceryl triacrylate, tris(2-hydroxyethyl)-isocyanurate triacrylate, pentaerythritol tetraacrylate (PETTA), ethoxylated pentaerythritol tetraacrylate, ditrimethylolpropane tetraacrylate (DiTMPTTA) or dipentaerythritol pentaacrylate (DiPEPA), alone or as a mixture.

6. Kit according to one of Claims 3 to 5, **characterized in that** the unsaturated oligomer is chosen from resins of epoxy acrylate, polyurethane acrylate, polyester urethane acrylate, polyester acrylate, polyether acrylate, (meth)acrylated rubber or bicycloaliphatic epoxide type.

7. Kit according to one of Claims 3 to 6, **characterized in that** the photoinitiator is chosen from:
- Norrish type I photoinitiators, such as 2-hydroxy-2-methyl-1-phenylpropan-1-one, benzoin ethers, for example benzoin methyl ether, benzoin ethyl ether, benzoin butyl ether and benzoin isopropyl ether, acetophenone derivatives, for example 2,2-diethoxyacetophenone (DEAP), (1-hydroxycyclohexyl)acetophenone, 2-hydroxy-2,2-dimethylacetophenone (HDMA) or 2,2-dimethoxy-2-phenylacetophenone (DMPA), benzil ketals, hydroxyalkylphenones, morpholinoketones or acylphosphine oxides, for example (2,4,6-trimethylbenzoyl)diphenylphosphine oxide and bis(2,4,6-trimethylbenzoyl)phenylphosphine oxide,
- Norrish type II photoinitiators, such as benzophenone and its derivatives, for example p-chlorobenzophenone or p-phenylbenzophenone, benzyl, xanthone, thioxanthone and its derivatives, such as 2-ethylthioxanthone, 2-chlorothioxanthone (2CTX), 2-isopropylthioxanthone or 1-chloro-4-propoxythioxanthone, anthraquinone or ketocoumarins.

8. Kit according to one of Claims 1 to 7, **characterized in that** the said fluid photopolymerizable composition additionally comprises an agent which promotes the initiation of the polymerization reaction chosen from tertiary amines and their derivatives, such as ethyl 4-(dimethylamino)benzoate, 2-butoxyethyl 4-(dimethylamino)benzoate, 2-ethylhexyl p-(dimethylamino)benzoate, 4,4'-diethylaminobenzophenone, triethanolamine, triethylamine and dimethylethanolamine.

9. Kit according to one of Claims 3 to 8, **characterized in that** the unsaturated oligomer is present at a concentration of 15 to 60% by weight, preferably of 25 to 35% by weight, in the liquid photocurable composition.

10. Kit according to one of Claims 3 to 9, **characterized in that** the monomer is present at a concentration of 20 to 70% by weight, preferably of 30 to 60% by weight, in the liquid photocurable composition.

11. Kit according to one of the preceding claims, **characterized in that** the said liquid composition additionally comprises between 0 and 15% by weight, preferably between 0.5 and 10% by weight and more preferably still between 0.5 and 7% by weight of additives preferably chosen from antibacterial agents, antistatic agents, antifoaming agents, resistance improvers or antioxidants.

12. Process for the manufacture of a self-levelling screed or overlayment, **characterized in that** it comprises the following successive stages:
a) mixing the various constituents of the kit according to one of Claims 1 to 11 with an amount of water sufficient to obtain a fluid composition,
b) applying the fluid composition obtained by pumping, by spraying or by pouring over the surface to be covered,
c) predrying the surface for a period of time of at least 24 hours,
d) curing the predried surface with an external irradiation source.

13. Process according to Claim 12, **characterized in that**, in stage a), the inorganic component and the water are first mixed and then the said liquid photocurable composition is added to the mixture obtained.

14. Process according to Claim 12, **characterized in that**, in stage a), a solution is formed by mixing the liquid photocurable composition with the water and then the inorganic component is mixed with the solution formed.

15. Process according to Claim 12, **characterized in that**, in stage a), the inorganic component is mixed with the said liquid photocurable composition and then the water is added to the mixture obtained.

16. Fluid composition for the manufacture of self-levelling screeds or overlayments, **characterized in that** it comprises a mixture, as percentage by weight, of:
- from 70 to 90% of a mortar comprising a hydraulic binder comprising between 0.01 and 20% by weight, with respect to the weight of mortar, of a rheological adjuvant of plasticizer and/or superplasticizer type,
- from 0.1 to 15% of the liquid photocurable composition according to Claim 3, and
- from 10 to 30% of water.

17. Self-levelling screed or overlayment capable of being obtained by the process according to one of Claims 12 to 15 or from the composition according to Claim 16.
